Europäisches Patentamt

European Patent Office

Office européen des brevets

(19)

(11) Numéro de publication: **O 023 864**
**B1**

(12)

# FASCICULE DE BREVET EUROPEEN

(45) Date de publication du fascicule du brevet: **06.07.83**

(21) Numéro de dépôt: **80401124.5**

(22) Date de dépôt: **30.07.80**

(51) Int. Cl.³: **B 25 J 13/02, G 05 G 9/04,
G 01 L 5/16**

(54) **Dispositif de commande manuelle, notamment poignée pour commander les déplacements d'un organe motorisé.**

(30) Priorité: **02.08.79 FR 7919844**

(43) Date de publication de la demande:
**11.02.81 Bulletin 81/6**

(45) Mention de la délivrance du brevet:
**06.07.83 Bulletin 83/27**

(84) Etats contractants désignés:
**AT BE CH DE GB IT LI LU NL SE**

(56) Documents cités:
**FR - A - 2 209 099
FR - A - 2 211 137
FR - A - 2 369 055
FR - A - 2 435 329
US - A - 3 824 674**

**JAPAN INDUSTRIAL ROBOT ASSOCIATION,
Proceedings of the 4th International Symposium
on Industrial Robots, 19-21 novembre 1974,
pages 65-78 Tokyo, JP. J. L. NEVINS et D. E.
WHITNEY: "Exploratory Research in Industrial
Modular Assembly"**

(73) Titulaire: **ASSOCIATION DES OUVRIERS EN
INSTRUMENTS DE PRECISION
8 à 14 rue Charles Fourier
F-75013 Paris (FR)**

(72) Inventeur: **David, Roger Jean Paul
8 rue de la Papeterie
F-91610 Ballancourt-sur-Essonne (FR)**
Inventeur: **Lande, Maurice Albert
197 rue de Lourmel
F-75015 Paris (FR)**

(74) Mandataire: **Lepeudry-Gautherat, Thérèse et al,
Cabinet Armengaud Jeune Casanova, Akerman,
Lepeudry 23 boulevard de Strasbourg
F-75010 Paris (FR)**

Courier Press, Leamington Spa, England.

# Dispositif de commande manuelle muni d'une poignée pour commander les déplacements d'un organe motorisé

La présente invention concerne un dispositif de commande manuelle muni d'une poignée pour commander manuellement les déplacements, dans trois directions perpendiculaires, d'un organe motorisé.

Le brevet FR - A - 2.209.099 décrit un dispositif de commande manuelle comportant un levier de commande des déplacements d'au moins un organe motorisé.

Ce dispositif comporte un élément flexible déformable élastiquement dont la partie centrale est reliée au levier et dont chacun des bras porte des jauges extensométriques montés respectivement sur les deux faces du bras.

Mais ce dispositif ne permet de commander les déplacements que dans un plan ou dans deux directions contenues dans ce plan car les débattements du levier sont limités dans un plan de référence dans lequel deux directions privilégiées perpendiculaires l'une à l'autre sont définies.

L'élément flexible et déformable élastiquement est une lame plane allongée dont la partie centrale est reliée sur toute sa largeur au levier de commande par l'intermédiaire d'un bras de liaison parallèle au levier, au plan de référence et à l'une des deux directions privilégiées dans ce plan lorsque le levier est au repos.

Le plan de la lame flexible est parallèle au levier au repos.

L'extrémité de chacun des deux bras de la lame porte deux axes parallèles au levier au repos et qui eux-mêmes portent des roulements à billes autorisant une rotation de cette extrémité ainsi que le déplacement de cette dernière dans la direction privilégiée qui est perpendiculaire à celle parallèle au bras de liaison de la lame au levier grâce à une rainure.

Chaque bras de la lame ne peut donc tourner sans torsion autour de son axe longitudinal lorsque le levier est déplacé dans un plan perpendiculaire à cet axe longitudinal.

En conséquence et en raison de la limitation à un plan de manoeuvre de commande du levier ainsi qu'en raison de l'encombrement d'un tel dispositif dont le levier est relié à l'élément déformable par un bras de liaison, ce dispositif n'est pas approprié à la commande des déplacements d'un organe motorisé tel qu'un bras manipulateur d'un automate qui doit absolument pouvoir se déplacer dans trois directions perpendiculaires.

Le brevet français FR - A - 2.435.329 (publié le 04.04.80) que la demanderesse a déposé le 10 Juillet 1978 pour "Manipulateur, en particulier automate de peinture, susceptible d'apprentissage" décrit un dispositif à poignée pour commander manuellement les déplacements, dans trois directions perpendiculaires, d'un bras d'un manipulateur, notamment d'un automate de peinture. Ce dispositif de commande manuelle comporte une membrane déformable en forme de croix, dont la partie centrale est assujettie à la poignée, et dont chacun des bras porte une paire de jauges extensométriques, fixées respectivement sur les deux faces du bras.

La présente invention concerne divers perfectionnements du dispositif de commande manuelle décrit dans le brevet français (FR - A - 2.435.329) précédemment mentionné, ces perfectionnements étant par ailleurs applicables à tous les dispositifs de commande manuelle du type précédemment indiqué, qu'ils soient associés ou non à des manipulateurs ou à des automates.

Le dispositif de commande manuelle selon la présente invention comporte également une membrane déformable en forme de croix, dont la partie centrale est assujettie à la poignée de commande, et dont chacun des bras porte une paire de jauges extensométriques, fixées respectivement sur les deux faces du bras; il est caractérisé en outre en ce que l'extrémité de chacun des bras de la membrane est accouplée à un élément solidaire de l'organe à déplacer, par l'intermédiaire d'un palier, aménagé de façon à permettre au bras correspondant de la membrane de tourner sans torsion autour de son axe longitudinal, lorsque la poignée subit un effort dans la direction perpendiculaire à cet axe.

Grâce à cette disposition selon la présente invention, tout effort, ou composante d'un effort appliqué à la poignée de commande dans une direction parallèle à l'axe de deux des bras de la membrane en forme de croix, a pour effet de déformer exclusivement ces deux bras, tandis que les deux autres bras, perpendiculaires à la direction de l'effort appliqué, tournent sans être déformés, notamment sans être tordus; l'effort, ou la composante de l'effort appliqué est donc capté seulement par les jauges extensométriques fixées aux bras parallèles à la direction de cet effort, alors que les jauges extensométriques fixées sur les deux autres bras, perpendiculaires à l'effort, ne sont pratiquement pas influencées par ce dernier. Ceci facilite considérablement le traitement, notamment par des circuits électroniques, des signaux électriques produits par les quatre paires de jauges extensométriques, fixées aux bras de la membrane déformable. On comprend en effet que la disposition selon la présente invention permet une séparation aisée des signaux correspondants respectivement aux composantes de l'effort appliqué à la poignée de commande, dans les trois directions perpendiculaires mentionnées.

Dans une forme de réalisation préférée du dispositif de commande manuelle selon la présente invention, la partie de chaque bras de la membrane, qui est comprise entre sa partie centrale et le palier associé à l'extrémité de ce bras, est au moins partiellement en forme de trapèze, de largeur décroissante dans la direction centrifuge. Cette disposition a pour effet de régulariser la courbure longitudinale que prend chaque bras de la membrane lorsque la poignée de commande subit un effort dans la direction longitudinale de ce bras.

D'autre part, selon la présente invention, l'extrémité de chaque bras de la membrane est montée dans le palier correspondant de préférence de façon à pouvoir coulisser librement, part rapport audit palier, dans la direction longitudinale de ce bras. Cette disposition facilite la déformation, notamment la courbure longitudinale, de chaque bras de la membrane lorsque la poignée de commande subit un effort dans la direction longitudinale de ce bras.

Pour produire des signaux électriques de commande de l'organe motorisé, le dispositif de commande manuelle selon la présente invention est aménagé de préférence de la façon suivante: les paires de jauges extensométriques fixées respectivement aux différents bras, a, b, c et d, de la membrane, sont montées électriquement en série entre les bornes d'une source de tension électrique, de manière que la courbure longitudinale que prend chaque bras de la membrane lorsque la poignée de commande subit un effort dans la direction longitudinale de ce bras, fasse apparaître, au point commun de la paire de jauges correspondante, une tension électrique, A, B, C ou D; d'autre part, des circuits électriques connus sont prévus pour en déduire des signaux électriques, respectivement proportionnels aux efforts subis par la poignée de commande dans les trois directions perpendiculaires:

$$X = A - C; \quad Y = B - D; \quad Z = A + C - B - D.$$

Selon une autre caractéristique avantageuse de l'invention, un bouton de préhension, par exemple hémisphérique, peut être accouplé, par l'intermédiaire d'une rotule, à l'extrémité libre de la poignée de commande ou de sa tige. Lorsque l'opérateur actionne alors la poignée de commande en agissant uniquement sur son bouton de préhension, les couples de torsion qu'il peut appliquer, même involontairement, audit bouton de préhension lorsqu'il déplace la poignée, ne sont pas transmis à la tige de cette dernière, en raison de l'interposition de la rotule, si bien que la tige de la poignée de commande ne reçoit que les composantes de translation de l'effort appliqué au bouton de préhension, ces composantes étant les seules qui doivent être captées par les jauges extensométriques, fixées aux différents bras de la membrane déformable.

Dans le cas où les paliers associés respectivement aux bras de la membrane sont montés sur les parois d'un boîtier, qui enveloppe ladite membrane, et qui est lui-même solidaire de l'organe à déplacer, le bouton de préhension peut être avantageusement raccordé au fond du boîtier par une manchette souple, de préférence en forme de soufflet, laquelle entoure sans contact la partie de la tige de la poignée de commande, qui sort librement dudit fond. La poignée proprement dite, que saisit l'opérateur est alors en fait formée par le bouton de préhension et la manchette souple qui le raccorde au fond du boîtier, où est logée la membrane déformable.

A titre d'exemple, on a décrit ci-dessous et illustré schématiquement au dessin annexé une forme de réalisation du dispositif de commande manuelle selon la présente invention, appliquée à la commande des déplacements des bras d'un automate de peinture.

La figure 1 est une vue schématique, en élévation, d'un automate de peinture, équipé d'un dispositif de commande manuelle selon la présente invention.

La figure 2 représente le dispositif de commande manuelle de la figure 1, en coupe par un plan passant par l'axe de sa poignée de commande.

La figure 3 est une vue partielle, en coupe suivant la ligne III—III de la figure 2.

La figure 4 est le schéma du montage électrique des quatre paires de jauges extensométriques, fixées sur la membrane déformable du dispositif de commande illustré sur les figures 2 et 3.

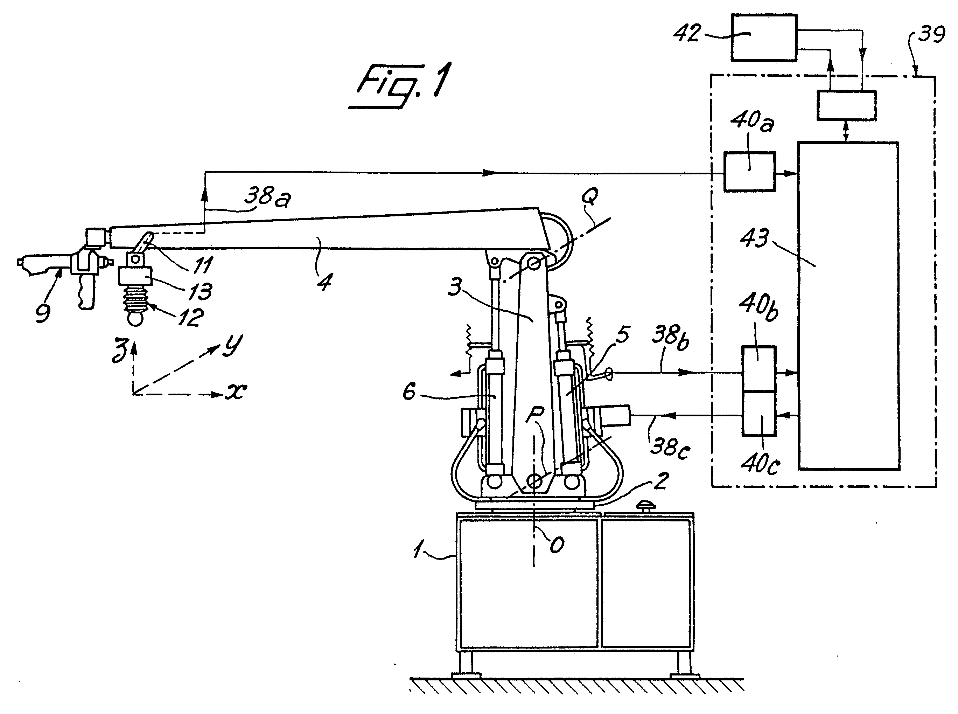

L'automate de peinture qui est illustré schématiquement sur la figure 1 est par exemple du type décrit dans le brevet français FR - A - 2.435.329, déjà mentionné précédemment. Il comporte un boîtier 1, sur lequel une tourelle 2 est montée de façon à pouvoir pivoter autour d'un axe vertical O, sous l'action d'un moteur logé dans le boîtier 1. Un bras 3 a son extrémité inférieure articulée sur la tourelle 2 de façon à pouvoir pivoter autour d'un axe horizontal P. Sur l'extrémité supérieure du bras 3, un avant-bras 4 a l'une de ses extrémités articulée de façon à pouvoir pivoter autour d'un axe horizontal Q. Deux vérins hydrauliques, 5 et 6, sont montés de façon à commander respectivement les pivotements des bras 3 et 4 autour de leurs articulations respectives. L'extrémité libre de l'avant-bras 4 supporte un pistolet de peinture 9. Un appendice tubulaire 11 se détache de l'avant-bras 4, à une petite distance de son extrémité portant le pistolet 9; cet appendice tubulaire 11 est conformé de façon à supporter, à une certaine distance de l'avant-bras 4, une poignée de commande manuelle 12; l'ensemble est disposé de telle façon qu'un même opérateur, puisse saisir, avec sa main droite, la crosse du pistolet de peinture 9 et avec sa main gauche, la poignée de commande manuelle 12.

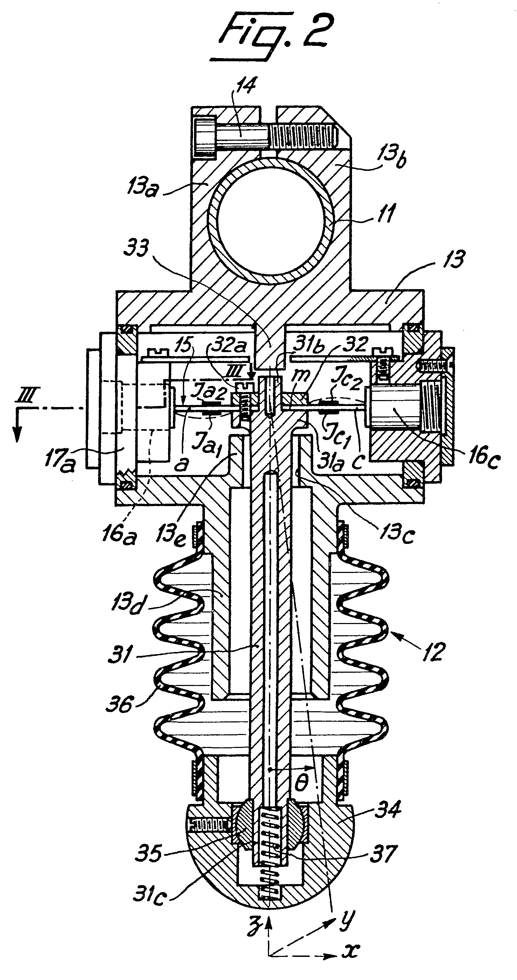

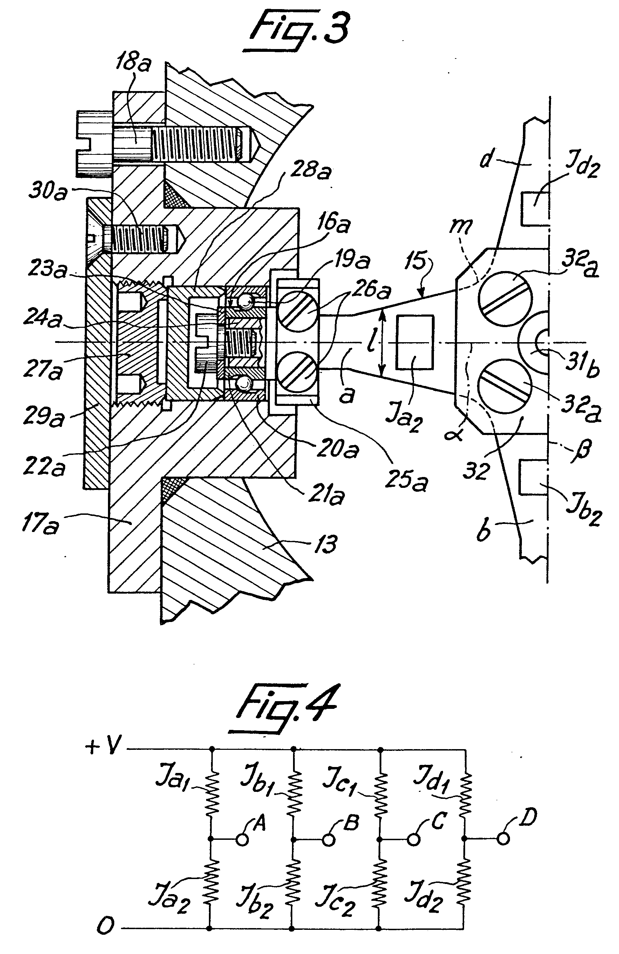

Comme visible sur les figures 2 et 3, un boîtier 13 est interposé entre la poignée de commande 12 et l'appendice tubulaire 11, autour duquel deux mâchoires, 13a et 13b, solidaires de la partie supérieure dudit boîtier 13, sont serrées par une vis 14. A l'intérieur du boîtier 13 est logée une membrane déformable en forme de croix, 15, dont on désignera dans la suite les quatre bras par a, b, c et d.

L'extrémité de chacun des bras a à d de la membrane 15 est accouplée à l'une des parois du boîtier 13, par l'intermédiaire d'un palier 16a, 16b, 16c ou 16d, qui est monté dans la paroi latérale correspondante du boîtier 13.

Dans la forme de réalisation illustrée partiellement, en coupe, à grande échelle, sur la figure 3, chaque palier tel que 16a est logé dans le perçage central d'un bouchon 17a, dont le corps est engagé dans un orifice correspondant de la paroi du boîtier 13, à laquelle une collerette dudit bouchon 17a est fixée par des vis telles que 18a.

La partie de chaque bras, tel que a, de la membrane 15, qui est comprise entre sa partie centrale m et le palier, 16a, associé à l'extrémité de ce bras, a, est partiellement en forme de trapèze, de largeur 1 décroissante dans la direction centrifuge. Chaque palier tel que 16a comporte au moins un roulement à billes 19a, dont le chemin de roulement extérieur, 20a, est engagé à force dans le perçage central du bouchon 17a, tandis que son chemin de roulement intérieur, 21a, est immobilisé par une vis 22a et une rondelle 23a sur le fût cylindrique 24a d'une pièce engagée dans le perçage central du bouchon 17a; vers l'extérieur du perçage central du bouchon 17a, le fût cylindrique 24a est prolongé par une pièce sensiblement cylindrique, 25a, qui en est solidaire, et qui comporte une fente disposée de façon à recevoir l'extrémité libre du bras a de la du bras a est de préférence épanouie de manière à pouvoir être serrée dans la fente de la pièce 25a par deux vis 26a. D'autre part, comme visible sur la figure 3, les chemins de roulement 20a et 21a du roulement à billes 19a sont aménagés de façon à autoriser un déplacement axial limité du chemin de roulement intérieur 21a par rapport au chemin de roulement extérieur 20a; comme l'extrémité du bras a de la membrane déformable 15 est solidaire des pièces 25a, 24a et 21a, cette disposition autorise l'extrémité de chaque bras, tel que a, de la membrane 15, à coulisser librement dans la direction longitudinale $\alpha$ dudit bras a, par rapport aux éléments du palier 16a qui sont solidaires de la paroi du boîtier 13. Il s'agit notamment du chemin de roulement extérieur 20a, qui est immobilisé axialement dans le perçage axial du bouchon 17a par un obturateur 27a, vissé dans la partie la plus externe de ce perçage central, de manière à serrer une pièce intercalaire 28a contre le chemin de roulement extérieur 20a. Le perçage central du bouchon 17a est enfin normalement obturé par un couvercle 29a, qui y est fixé par des vis telles que 30a. Cette disposition a l'avantage de permettre de démonter chacun des paliers tels que 16a, de l'extérieur du boîtier 13.

La partie centrale, m, de la membrane déformable 15, est d'autre part assujettie à l'extrémité supérieure d'une tige 31, qui traverse librement le fond du boîtier 13 par un perçage 13c de ce fond; l'embouchure extérieure de ce perçage 13c est entourée, à l'extérieur du boîtier 13, et en dessous de son fond, par un embout tubulaire 13d, qui entoure sans contact la partie supérieure de la tige 31. L'extrémité supérieure de cette tige 31 comporte d'autre part une collerette débordante 31a, sur laquelle la partie centrale m de la membrane déformable 15 est serrée par une pièce 32 et des vis telles que 32a, de façon à assurer un encastrement de ladite partie centrale m sur l'extrémité supérieure de la tige 31. L'extrémité supérieure, 31b, de cette tige 31 traverse d'autre part un perçage central de la membrane 15 et s'étend au-dessus de la pièce 32, comme visible sur la figure 2, en direction d'une butée axiale 33, aménagée dans la paroi supérieure du boîtier 13.

Un bouton de préhension hémisphérique, 34, est accouplé, par l'intermédiaire d'une rotule 35, à l'extrémité libre, inférieure, 31c, de la tige 31. Dans la forme de réalisation considérée, ce bouton de préhension hémisphérique 34 est raccordé au fond du boîtier 13, et en particulier à la partie supérieure de l'embout 13d qui le prolonge vers le bas, par une manchette souple 36, en forme de soufflet, par exemple en cuir, qui entoure sans contact la partie de la tige 31 qui est extérieure à l'embout tubulaire 13d du boîtier 13. La poignée de commande manuelle 12, que saisit l'opérateur est alors constituée essentiellement par le bouton de préhension 34, éventuellement la partie inférieure de la manchette souple 36, qui est assujettie audit bouton de préhension. Pour éviter que la membrane 15 ne soit déformée lorsqu'aucun effort n'est appliqué à la poignée de commande 12, un ressort 37 est inséré entre les fonds respectifs de deux évidements coaxiaux aménagés, l'un dans le bouton de préhension 34, et l'autre dans l'extrémité inférieure, 31c, de la tige 31, de façon à compenser le poids de ladite tige 31.

Selon la présente invention, des paires de jauges extensométriques, telles que Ja1 et Ja2, sont fixées, par exemple collées, respectivement sur les deux faces de chaque bras, tel que a, de la membrane déformable 15. D'autre part, ces paires de jauges extensométriques, fixées respectivement aux différents bras a, b, c et d de la membrane 15 sont montées électriquement en série, comme illustré sur la figure 4, entre les bornes d'une source de tension électrique, en particulier d'une source de tension continue + V, et des signaux électriques A, B, C et D sont prélevés respectivement aux points communs des différentes paires de jauges, telles que Ja1 et Ja2, montées en série. Ces quatre signaux électriques sont appliqués respectivement aux quatre conducteurs d'un câble 38a, qui passe à l'intérieur de l'avant-bras 4 par le canal intérieur de l'appendice tubulaire 11. Ce câble aboutit dans un dispositif de commande automatique 39, et notamment dans un ensemble de circuits électriques 40a, de type connu, qui sont aménagés pour déduire des signaux A à D, amenés par le câble 38, des signaux électriques $X = A - C$, $Y = B - D$, $Z = A + C - B - D$, lesquels sont respectivement proportionnels aux efforts subis par la poignée de commande 12 dans trois directions perpendiculaires les unes aux autres, qui ont été désignées respectivement par x, y et z alors que la direction z est verticale, les deux directions horizontales, x et y, sont choisies de telle façon que, quand la tourelle 2 de l'automate de peinture de la figure 1, ainsi que ses bras 3 et 4 occupent des positions déterminées de repos, et qu'aucun effort n'est appliqué à la poignée de commande 12, la direction longitudinale $\alpha$ des bras a et c de la membrane déformable 15 est parallèle à la direction x, tandis que la direction longitudinale $\beta$ de ses bras b et d est parallèle à la direction y.

Le dispositif de commande automatique 39 est d'autre part raccordé à une mémoire 42 d'un type connu, et il comporte en outre un microprocesseur, 43, un interface 40b, auquel sont connectés électriquement, par un câble 38b, des capteurs des déplacements autour des trois axes O, P et Q, ainsi qu'un interface 40c, qui transmet par un câble 38c des signaux de commande aux moteurs respectifs de la tourelle 2 et des bras 3 et 4 (les vérins 5 et 6).

L'automate de peinture qui vient d'être décrit est utilisé de la façon suivante:

L'automate de peinture occupant sa position de repos précédemment définie, l'opérateur va tout d'abord exercer, avec sa main gauche, sur la poignée de commande manuelle 12, des efforts appropriés pour amener le pistolet 9 en un point déterminé de l'espace, en lequel il orientera alors, avec sa main droite, le pistolet 9, dans la direction choisie. Pour faciliter la compréhension du fonctionnement de la poignée de commande 12, on suppose par exemple que l'opérateur exerce tout d'abord sur la poignée 12 une traction horizontale dans la direction x, qui a pour effet de faire pivoter l'axe géométrique de la tige de commande 31, précédemment vertical, dans un plan vertical parallèle à la direction x, d'un angle $\theta$, dans le sens inverse des aiguilles d'une montre. En raison de l'encastrement des deux extrémitiés de chacun des deux bras a et c de la membrane 15, dont la direction longitudinale $\alpha$ est parallèle à x, les bras a et c de ladite membrane sont déformés comme indiqué en traits interrompus sur la figure 2, de telle façon que leurs fibres moyennes respectives prennent des courbures régulières, pratiquement constantes en raison de la forme trapézoïdale des bras a et c. La régularité de la déformation des bras a et c de la membrane est encore favorisée par le libre coulissement de leurs extrémités par rapport aux parties fixes des paliers correspondants,

16a et 16c. Par contre, les deux autres bras, b et d, de la membrane 15, dont la direction longitudinale $\beta$ est perpendiculaire à la direction, x, de l'effort appliqué manuellement à la poignée 12, pivotent en bloc d'un angle $\theta$, de manière à rester pratiquement perpendiculaires à l'axe de la tige 31, grâce au pivotement de leurs extrémités respectives dans les paliers correspondants (non représentés). Il apparaît par suite aux points communs respectifs des différentes paires de jauges extensométriques, des signaux A et C d'amplitudes pratiquement égales, mais de signes contraires, et des signaux B et D d'amplitudes pratiquement nulles. Il en résulte que, des trois signaux électriques qu'en déduit le circuit 40a (figure 1), seul le signal $X = A - C$ n'est pas nul; on peut même montrer facilement qu'il est proportionnel à la variation relative de longueur de chacun des bras a et c de la membrane 15 sous l'effet du moment fléchissant qui leur est appliqué par l'intermédiaire de la tige 31, donc sensiblement proportionnel à l'effort appliqué à ladite tige dans la direction x. Si par contre l'opérateur exerce sur la poignée de commande 12 un effort dans la direction horizontale y, ce sont les bras b et d de la membrane déformable 15 qui sont cintrés, et le circuit 40a produit un seul signal non nul, $Y = B - D$, qui est directement proportionnel à cet effort horizontal. Dans le cas, au contraire, où l'opérateur exerce sur la poignée 12, et notamment sur son bouton de préhension 34, un effort dans la direction verticale z, ce sont les quatre bras a à d de la membrane 15 qui sont cintrés de façon par exemple à présenter des courbures sensiblement égales, tournées vers le bas s'il s'agit d'un effort ascendant; dans ce cas, $A = C$ et $B = D$, si bien que le seul signal non nul produit par le circuit 40a est $Z = A + C - B - D$, qui est encore proportionnel à l'effort appliqué. Dans le cas le plus général, où l'effort appliqué par l'opérateur à la poignée de commande 12 présente des composantes non nulles dans les trois directions perpendiculaires x, y et z, il est évident que le circuit 40a produit trois signaux X, Y et Z dont aucun n'est nul, mais dont chacun est proportionnel à la composante correspondante de l'effort appliqué. Si, en manipulant la poignée 12, et notamment son bouton de préhension 34, l'opérateur exerce sur ce dernier un couple de torsion, celui-ci n'est pas transmis à la tige de commande 31, ni par suite à la membrane déformable 15, en raison de l'interposition de la rotule 35. Bien entendu, les différents mouvements de la tige 31 par rapport au boîtier 13 sont limités par des butées correspondantes. On a déjà mentionné la butée axiale 33 (figure 2), qui limite les déplacements verticaux ascendants de la tige 31; ses mouvements verticaux descendants sont limités par la venue en butée de la collerette 31a, solidaire de la partie supérieure de la tige 31, avec la saillie annulaire, 13e, qui, à l'intérieur du boîtier 13, entoure l'orifice 13c de son fond, que traverse la tige 31. Cette même saillie annulaire, 13e, sert à limiter les débattements angulaires de la tige 31 sous l'effet des composantes horizontales des efforts appliqués à la poignée 12.

Les signaux électriques X, Y et Z qui sont produits par le circuit 40a lorsque l'opérateur exerce des efforts sur la poignée de commande 12, sont transmis au microprocesseur 43, en même temps que l'interface 40b lui transmet des signaux électriques de position des différents organes mobiles, 2, 3 et 4, de l'automate. A partir de ces données, le microprocesseur 43 élabore des signaux électriques de commande, qui sont transmis, par l'intermédiaire de l'interface 40c et du câble 38c, aux moteurs respectifs des organes mobiles 2, 3 et 4. Le microprocesseur 43 est programmé de manière que les moteurs précédemment mentionnés appliquent aux différents organes mobiles 2, 3 et 4 des forces dont la résultante est parallèle, de même sens et proportionnelle à l'effort appliqué manuellement par l'opérateur à la poignée de commande 12, de composantes X, Y et Z, le coefficient de proportionnalité étant choisi notablement supérieur à l'unité, de façon à obtenir une multiplication dudit effort manuel, suffisante pour vaincre l'inertie et les frottements internes de l'automate.

Dans le cas de l'automate considéré, susceptible d'apprentissage, les valeurs successives des signaux de position des organes mobiles 2, 3, 4 reçus par l'interface 40b, sont enregistrées au fur et à mesure dans la mémoire 42. Après cette phase d'apprentissage, le contenu de la mémoire 42 peut être lu, les signaux de mémoire, traités par le microprocesseur 43, étant transmis successivement par l'interface 40c et le câble 38c, aux moteurs respectifs des organes mobiles 2, 3, 4, de manière que l'extrémité de l'avantbras 4, qui porte le pistolet de peinture 9, effectue automatiquement dans l'espace les mêmes mouvements que lors de la phase précédente d'apprentissage, où l'opérateur commandait ces mouvements en agissant sur la poignée 12.

Le dispositif de commande manuelle qui vient d'être décrit n'est pas destiné exclusivement à la commande manuelle des déplacements d'un automate de peinture; il peut être utilisé pour commander les déplacements, dans trois directions perpendiculaires, d'un bras d'un automate ou d'un manipulateur quelconque, ou même, plus généralement, d'un organe motorisé quelconque.

Les jauges extensométriques Ja1 à Jd2 peuvent être remplacées par des capteurs plats de déformation ou de contrainte, d'un autre type, approprié. Le bouton de préhension 34 et sa manchette de raccordement 36 sont facultatifs; en leur absence, cependant, les couples de torsion que l'opérateur applique éventuellement à la tige 31, à laquelle se trouve réduite la poignée de commande 12, produisent les déformations spécifiques de la membrane 15, si bien que l'exploitation des signaux électriques produits par les capteurs plats de déformation ou de contrainte, notamment les jauges extensométriques Ja1 à Jd2, peut nécessiter des circuits électroniques relativement plus compliqués. Le montage de la membrane déformable 15 dans un boîtier 13, ainsi que la réalisation de ce dernier, sont matières à option. Il en va de même du montage électrique des différentes jauges extensométriques, Ja1 à Jd2, qui est illustré sur la figure 4. Les paliers à billes, tels que 16a peuvent être remplacés par des paliers équivalents, d'un autre type connu; au lieu de prévoir une possibilité de coulissement axial entre les deux chemins de roulement, 20a et 21a, de chaque roulement à billes 16a, ou de chaque palier équivalent, il est également possible de prévoir une possibilité de libre coulissement de l'extrémité libre du bras correspondant, a, de la membrane 15, par rapport à la partie tournante du palier. La forme de chaque bras de la membrane déformable 15 est matière à option.

## Revendications

1. Dispositif de commande manuelle, muni d'une poignée (12) pour commander manuellement les déplacements, dans trois directions perpendiculaires (x, y, z), d'un organe motorisé, par exemple d'un bras (4) de manipulateur ou d'automate, ce dispositif comportant une membrane (15) déformable en forme de croix, dont la partie centrale (m) est assujettie à ladite poignée (12), et dont chacun des bras (a, b, c, d,) porte une paire de jauges extensométriques ($Ja_1$, $Ja_2$, $Jb_1$, $Jb_2$, $Jc_1$, $Jc_2$) fixées respectivement sur les deux faces du bras (a, b, c, d) et étant caractérisé en ce que l'extrémité de chacun des bras (a, b, c, d) de la membrane (15) est accouplée à un élément (13) solidaire de l'organe à déplacer (4), par l'intermédiaire d'un palier (16a, 16b, 16c, 16d) aménagé de façon à permettre au bras (a, b, c, d) correspondant de la membrane (15) de tourner sans torsion autour de son axe longitudinal ($\alpha$, $\beta$), lorsque la poignée (12) subit un effort dans la direction perpendiculaire à cet axe ($\alpha$, $\beta$).

2. Dispositif selon la revendication 1, caractérisé en ce que la partie de chaque bras (a, b, c, d) de la membrane (15), qui est comprise entre sa partie centrale (m) et le palier (16a, 16b, 16c, 16d) associé à l'extrémité de ce bras (a, b, c, d) est au moins partiellement en forme de trapèze, de largeur (1) décroissante dans la direction centrifuge.

3. Dispositif selon l'une quelconque des revendications 1 et 2, caractérisé en ce que l'extrémité de chaque bras (a, b, c, d) de la membrane (15) est montée dans le palier (16a, 16b, 16c, 16d) correspondant de façon à pouvoir coulisser librement, par rapport audit palier (16a, 16b, 16c, 16d), dans la direction longitudinale ($\alpha$, $\beta$) de ce bras (a, b, c, d).

4. Dispositif selon l'une quelconque des revendications 1 à 3, caractérisé en ce que les paires de jauges extensométriques (Ja$_1$, Ja$_2$, Jb$_1$, Jb$_2$, Jc$_1$, Jc$_2$) fixées respectivement aux différents bras (a, b, c et d) de la membrane (15) sont montées électriquement en série entre les bornes d'une source de tension électrique (+ V), de manière que la courbure longitudinale que prend chaque bras (a, b, c, d,) de la membrane (15) lorsque la poignée de commande (12) subit un effort dans la direction longitudinale ($\alpha$, $\beta$) de ce bras (a, b, c, d) fasse apparaître, au point commun de la paire de jauges correspondante (Ja$_1$, Ja$_2$, Jb$_1$, Jb$_2$, Jc$_1$, Jc$_2$) une tension électrique A, B, C ou D, et que des circuits électriques connus (40a) sont prévus pour en déduire des signaux électriques, respectivement proportionnels aux efforts subis par la poignée de commande (12) dans les trois directions perpendiculaires (x, y, z) $X = A - C$; $Y = B - D$; $Z = A + C - B - D$.

5. Dispositif selon l'une quelconque des revendications 1 à 4, caractérisé en ce que les paliers (16a, 16b, 16c, 16d) associés respectivement aux bras (a, b, c, d) de la membrane (15), notamment des paliers à roulements à billes (19a, 19b, 19c, 19d), sont montés sur les parois d'un boîtier (13) enveloppant ladite membrane (15), ce boîtier (13) étant fixé à l'organe à déplacer (4), par exemple par l'intermédiaire d'un appendice (11) et son fond étant traversé librement par la poignée de commande (12) ou par sa tige (31), sur l'extrémité intérieure (31a, 31b) audit boîtier (13) de laquelle est encastrée la partie centrale (m) de la membrane (15).

6. Dispositif selon l'une quelconque des revendications 1 à 5, caractérisé en ce qu'un bouton de préhension (34), par exemple hémisphérique, est accouplé, par l'intermédiaire d'une rotule (35), à l'extrémité libre (31c) de la poignée de commande (12) ou de sa tige (31).

7. Dispositif selon la revendication 6, caractérisé en ce que le bouton de préhension (34) est raccordé au fond du boîtier (13) par une manchette souple (36) de préférence en forme de soufflet, laquelle entoure sans contact la partie de la tige (31) de la poignée de commande (12), qui est extérieure audit boîtier (13).

8. Dispositif selon l'une quelconque des revendications 5 à 7, caractérisé en ce que des butées (33, 13e) sont aménagées sur les parois internes du boîtier (13) pour limiter les déplacements de la poignée (12, 31).

**Patentansprüche**

1. Handbetätigte Führungsvorrichtung mit einem Handgriff zum Führen der Bewegungen eines angetriebenen Werkzeuges, beispielsweise eines Manipulator- oder Automatenarmes in drei senkrecht zueinander stehenden Richtungen, bestehend aus einer flexiblen, kreuzförmigen Membran, deren Zentrum mit dem Handgriff verbunden ist und deren Arme ein zu beiden Seiten eines jeden Armes angeordnetes Paar Dehnungsmesser tragen, dadurch gekennzeichnet, daß das Ende eines jeden Armes (a, b, c, d) der Membran (15) an ein mit dem zu bewegenden Werkzeug (4) verbundenes Element (13) angekuppelt ist, und zwar unter Zwischenschaltung jeweils eines Lagers (16a, 16b, 16c, 16d), derart, daß der Arm (a, b, c, d) ohne Verwindung um seine Längsachse ($\alpha$, $\beta$) verdrehbar ist, wenn der Handgriff (12) in einer Richtung senkrecht zu dieser Längsachse ($\alpha$, $\beta$) betätigt wird.

2. Vorrichtung nach Anspruch 1, dadurch gekennzeichnet, daß der zwischen dem Zentrum (m) der Membran (15) und dem mit dem Lager (16a, 16b, 16c, 16d) verbundenen Ende befindliche Bereich eines jeden Armes (a, b, c, d) zumindest teilweise trapezförmig ausgebildet ist und daß sich seine Breite (1) nach außen verjüngt.

3. Vorrichtung nach einem der Ansprüche 1 und 2, dadurch gekennzeichnet, daß das Ende eines jeden Armes (a, b, c, d) der Membran (15) derart an seinem zugehörigen Lager (16a, 16b, 16c, 16d) befestigt ist, daß es relativ zu diesem Lager (16a, 16b, 16c, 16d) in der Längsrichtung ($\alpha$, $\beta$) dieses Armes (a, b, c, d) verschiebbar geführt ist.

4. Vorrichtung nach einem der Ansprüche 1 bis 3, dadurch gekennzeichnet, daß die auf den verschiedenen Armen (a, b, c, d) der Membran (15) befestigten Paare von Dehnungsmessern (Ja$_1$, Ja$_2$, Jb$_1$, Jb$_2$, Jc$_1$, Jc$_2$) elektrisch in Serie geschaltet sind zwischen den Klemmen einer elektrischen Spannungsquelle (+V) derart, daß die Längswölbung, die jeder Arm (a, b, c, d) der Membran (15) erfährt, wenn der Handgriff (12) in Längsrichtung ($\alpha$, $\beta$) dieses Armes bewegt wird, eine elektrische Spannung A, B, C oder D am Verbindungspunkt der zugehörigen Dehnungsmesser-Paare (Ja$_1$, Ja$_2$, Jb$_1$, Jb$_2$, Jc$_1$, Jc$_2$) erzeugt und daß an sich bekannte elektrische Stromkreise (40a) vorgesehen sind, um hieraus elektrische Signale abzuleiten, die zu den Beanspruchungen des Handgriffes (12) in den drei senkrecht aufeinanderstehenden Richtungen (x, y, x) proportional sind: $X = A - C$; $Y = B - D$; $Z = A + C - B - D$.

5. Vorrichtung nach einem der Ansprüche 1 bis 4, dadurch gekennzeichnet, daß die mit dem Armen (a, b, c, d) der Membran (15) verbundenen Lager (16a, 16b, 16c, 16d), insbesondere Kugellager (19a, 19b, 19c, 19d) in den Wänden eines die Membran (15) umgebenden Gehäuses (13) montiert sind und dieses Gehäuse (13) beispielsweise mittels eines Fortsatzes (11) mit dem zu bewegenden Werkzeug (4) verbunden ist und daß sein Boden von dem Handgriff (12) oder von dessen Haltestange (31) mit seitlichem Spiel durchquert ist, wobei an dem im Inneren des Gehäuses (13) befindlichen Ende des Handgriffes (12) oder seiner Haltestange (31) der zentrale Teil (m) der Membran (15) eingebaut ist.

6. Vorrichtung nach einem der Ansprüche 1 bis 5, dadurch gekennzeichnet, daß ein beispielsweise halbkugelförmiger Griff (34) mittels eines Gelenkes (35) am freien Ende (31c) des Handgriffes (12) oder seiner Haltestange (31) befestigt ist.

7. Vorrichtung nach Anspruch 6, dadurch gekennzeichnet, daß der Griff (34) durch eine flexible Manschette, vorzugsweise einen Balg (36) mit dem Boden des Gehäuses (13) verbunden ist und daß dieses Manschette berührungslos denjenigen Teil der Haltestange (31) des Handgriffes (12) umgibt, der sich außerhalb des Gehäuses (13) befindet.

8. Vorrichtung nach einem der Ansprüche 5 bis 7, dadurch gekennzeichnet, daß an den Innenwänden des Gehäuses (13) Anschläge (33 und 13e) zum Begrenzen der Bewegungen des Handgriffes (12) angeordnet sind.

## Claims

1. A manually controlled device provided with a handle (12) for manually displacing, in three directions (x, y, z) at right angles to each other, a driven member, for example of an arm (4) of a manipulator or automatic machine, this device comprising a deformable cruciform membrane (15), the central portion (m) of which is acted upon by said handle (12), and each arm (a, b, c, d) of which carries a pair of strain gauges $(Ja_1, Ja_2, Jb_1, Jb_2, Jc_1, Jc_2)$ secured respectively on the two faces of the arm (a, b, c, d), the device being characterized in that the end of each of the arms (a, b, c, d) of the membrane (15) is connected to an element (13) firmly attached to the member (4) to be moved, by way of a bearing (16a, 16b, 16c, 16d) formed to enable the corresponding arm (a, b, c, d) of the membrane (15) to turn, without twisting, about its longitudinal axis $(\alpha, \beta)$ when the handle (12) is subjected to a force in the direction at right angles to this axis $(\alpha, \beta)$.

2. A device according to Claim 1, characterized in that that portion of each arm (a, b, c, d) of the membrane (15) that lies between its central portion (m) and the bearing (16a, 16b, 16c, 16d) associated with the end of this arm (a, b, c, d) is shaped, at least partially, as a trapezium, having a width (1) diminishing in the centrifugal direction.

3. A device according to Claim 1 or Claim 2, characterized in that the end of each arm (a, b, c, d) of the membrane (15) is mounted in the corresponding bearing (16a, 16b, 16c, 16d) in such manner as to be able to slide freely, relatively to said bearing (16a, 16b, 16c, 16d), in the longitudinal direction $(\alpha, \beta)$ of this arm (a, b, c, d).

4. A device according to any one of Claims 1 to 3, characterized in that the pairs of strain gauges $(Ja_1, Ja_2, Jb_1, Jb_2, Jc_1, Jc_2)$, secured respectively to the various arms (a, b, c and d) of the membrane (15), are electrically connected in series between the terminals of an electrical current source (+ V) in such manner that the longitudinal curvature assumed by each arm (a, b, c, d) of the membrane (15) when the control handle (12) is subjected to a force in the longitudinal direction $(\alpha, \beta)$ of each arm (a, b, c, d), produces a voltage A, B, C or D, at the point common to the pair of corresponding gauges $(Ja_1, Ja_2, Jb_1, Jb_2, Jc_1, Jc_2)$, and in that electrical circuits (40a) or known kind are provided for obtaining therefrom electrical signals which are respectively proportional to the forces to which the control handle (12) is subjected in the three directions (x, y, z) at right angles to each other — X = A − C; Y = B − D; Z = A + C − B − D.

5. A device according to any one of Claims 1 to 4, characterized in that the bearings (16a, 16b, 16c, 16d) associated respectively with the arms (a, b, c, d) of the membrane (15), particularly ball bearings (19a, 19b, 19c, 19d), are mounted on the walls of a case (13) enclosing said membrane (15), this case (13) being secured to the member (14) to be displaced, for example by way of a suspended element (11), and its base being freely traversed by the control handle (12) or by its rod (31), to that end (31a, 31b) of which that is located within said case (13) is fixed the central portion (m) of the membrane (15).

6. A device according to any one of Claims 1 to 5, characterized in that a gripping knob (34), which is hemispherical, for example, is attached, by means of a ball-and-socket joint (35), to the free end (31c) of the control handle (12) or of its rod (31).

7. A device according to Claim 6, characterized in that the gripping knob (34) is connected to the bottom of the case (13) by a flexible sleeve (36), preferably in the form of a bellows, which surrounds, without touching, that portion of the rod (31) of the control handle (12) that is outside said case (13).

8. A device according to any c e of Claims 5 to 7, characterized in that stops (33, 13e) are formed on the inner walls of the case (13) so as to limit the movements of the handle (12, 31).

*Fig.1*

_Fig. 2_

_Fig.3_

_Fig.4_

3